# EUROPÄISCHE PATENTSCHRIFT

(11) **EP 3 802 265 B1**
(45) Veröffentlichungstag und Bekanntmachung des Hinweises auf die Patenterteilung: **10.07.2024**
(21) Anmeldenummer: 19721601.3
(22) Anmeldetag: 02.05.2019
(51) Int. Cl.: B60M 1/28, B61L 23/04, E01B 35/04, E01B 35/06

(54) **VERFAHREN UND SYSTEM ZUR ERMITTLUNG EINER IST-LAGE VON SCHIENEN EINES GLEISES**
METHOD AND SYSTEM FOR DETERMINING AN ACTUAL POSITION OF RAILS OF A TRACK
PROCÉDÉ ET SYSTÈME PERMETTANT DE DÉTERMINER UNE POSITION RÉELLE DE RAILS D'UNE VOIE FERRÉE

(30) Priorität: 01.06.2018 AT 1592018
(43) Veröffentlichungstag der Anmeldung: 14.04.2021
(73) Patentinhaber: Plasser & Theurer Export von Bahnbaumaschinen Gesellschaft m.b.H., 1010 Wien (AT)
(72) Erfinder: BÜRGER, Martin, 4030 Linz (AT)
(86) Internationale Anmeldenummer: PCT/EP2019/061178
(87) Internationale Veröffentlichungsnummer: WO 2019/228742

(56) Entgegenhaltungen:
- WO-A1-2015/003772
- DE-A1- 102012 203 483
- PANTYUSHIN ANTON ET AL: "Control measurement system for railway track position", VISUAL COMMUNICATIONS AND IMAGE PROCESSING; 20-1-2004 - 20-1-2004; SAN JOSE,, vol. 8486, 11 October 2012 (2012-10-11), pages 84861B - 84861B, XP060029552, ISBN: 978-1-62841-730-2, DOI: 10.1117/12.930503

## Beschreibung

### Gebiet der Technik

Die Erfindung betrifft ein Verfahren zur Ermittlung einer Ist-Lage von Schienen eines Gleises mittels einer auf einem Schienenfahrzeug positionierten optischen Sensoreinrichtung zur Lageerfassung des Gleises und benachbarter Einrichtungen. Zudem betrifft die Erfindung ein System zur Durchführung des Verfahrens.

### Stand der Technik

Für eine Instandhaltung des Gleisoberbaus sind wiederkehrende Kontrollen erforderlich. Dabei wird die Ist-Lage ein Gleis in regelmäßigen Abständen vermessen, um Verschlechterungen zu beurteilen und gegebenenfalls Vorgaben für Instandhaltungsmaßnahmen abzuleiten. Das geschieht in der Regel mit einem Gleismessfahrzeug, an dem mehrere Messsysteme angeordnet sind. Insbesondere optische Sensoreinrichtungen werden genutzt, um die Oberflächenkontur des Gleises und seiner Umgebung zu erfassen.

AT 514 502 A1 beschreibt ein Messsystem, bei dem zur Ermittlung der Position eines Gleis-Festpunktes ein kontinuierlich am Gleis entlang bewegter Laserscanner genutzt wird. Anhand eines Abstandes zu einem erkannten Festpunktmarker wird eine mittels eines Schienenfahrwerks abgetastete Ist-Lage des Gleises in Bezug zu einer Soll-Lage bewertet.

Auch AT 518 692 A1 offenbart einen an einem Schienenfahrzeug angeordneten Laserscanner, mittels dem während des Befahrens eines Gleises Oberflächenkonturen dieses Gleises und seiner Umgebung erfasst werden. Als Resultat liegt eine Punktwolke vor, deren jeweilige Punktkoordinaten zunächst auf ein mit dem Laserscanner mitgeführtes Koordinatensystem bezogen sind.

Bei einer derartigen Erfassung des Gleises und seiner Umgebung besteht somit die Notwendigkeit, auch die Bewegung dieses mitgeführten Koordinatensystems in Bezug auf ein ortfestes bzw. inertes Bezugssystem zu erfassen. Konkret muss eine Bogen-, Längshöhen- und Überhöhungskorrektur erfolgen, weil sich der Laserscanner während eines durchfahrenen Gleisbogens mit dem Schienenfahrzeug mitbewegt. Dabei wird eine Lageänderung während einer Bogenfahrt beispielsweise mittels einer Inertialmesseinheit erfasst.

### Zusammenfassung der Erfindung

Der Erfindung liegt die Aufgabe zugrunde, für ein Schienenfahrzeug der eingangs genannten Art eine Verbesserung gegenüber dem Stand der Technik anzugeben.

Erfindungsgemäß werden diese Aufgaben gelöst durch die Merkmale der Ansprüche 1 und 13. Abhängige Ansprüche geben vorteilhafte Ausgestaltungen der Erfindung an.

Auf diese Weise werden miterfasste Lagedaten vorhandener Infrastruktureinrichtungen mit bekannten geometrischen Formen genutzt, um die Datenkorrektur durchzuführen. Die Verzerrungen der Ist-Daten, die durch Bewegungen der Sensoreinrichtung während einer Datenerfassung auftreten, werden ohne Zusatzaufwand ausgeglichen. Es ist somit keine separate Erfassung der Bewegungen der Sensoreinrichtung bzw. des Schienenfahrzeuges erforderlich.

Vorteilhafterweise ist für die Transformation der Ist-Daten vorgesehen, dass für den erfassten Verlauf eines Fahrdrahtes der Oberleitungsanlage, als eine der benachbarten Einrichtungen, zwischen zwei Befestigungsstellen an Mastauslegern eine Gerade als geometrische Form vorgegeben wird. Durch die Vorspannung im Fahrdraht behält dieser auch bei Wind oder bei Belastung durch einen Stromabnehmer seine Form, wobei geringfügige Abweichungen vom geraden Verlauf vernachlässigbar sind.

Für eine automatisierte Erfassung der jeweiligen Befestigungsstelle an einem Mastausleger ist es von Vorteil, wenn für den erfassten Verlauf des Fahrdrahtes eine Stelle mit einer maximalen Krümmung ermittelt wird. In der Regel erfolgt an den Befestigungsstellen eine Richtungsänderung des Fahrdrahtes, sodass der Fahrdraht in der horizontalen Ebene im Zickzack verläuft. Damit wird das Einschleifen von Rillen in Graphit-Schleifleisten der Stromabnehmer vermieden. Dieses Merkmal der Oberleitungsanlage wird genutzt, um anhand des erfassten Fahrdrahtverlaufs die Positionen der Befestigungsstellen bzw. der Mastausleger zu bestimmen.

Um die Genauigkeit des Verfahrens weiter zu steigern, ist es sinnvoll, wenn der Verlauf des Fahrdrahtes als ein Verlauf einer Fahrdrahtkante erfasst wird. Das ist insbesondere beim Einsatz einer hochauflösenden Sensoreinrichtung von Vorteil. Insbesondere die untere Fahrdrahtkante wird beispielsweise mittels eines Laserscanners mit horizontaler Rotationsachse genau erfasst.

Eine weitere vorteilhafte Variante sieht vor, dass für den erfassten Verlauf einer Bahnsteigkante, als eine der benachbarten Einrichtungen, eine Gerade als geometrische Form vorgegeben wird, um die vorläufigen Ist-Daten in korrigierte Ist-Daten zu transformieren. In jedem Bahnhofsbereich steht diese von äußeren Bedingungen unbeeinflusste Infrastruktureinrichtung zur Verfügung, um die Datentransformation durchzuführen.

Falls eine Spitzenleitung zwischen zwei Mastspitzen vorhanden ist, wird auch diese günstigerweise genutzt, um die Datentransformation durchzuführen. Dabei wird für den erfassten Verlauf einer Spitzenleitung, als eine der benachbarten Einrichtungen, eine Seilkurve als geometrische Form vorgegeben. Auf diese Weise ist zumindest eine hinreichende Korrektur des erfassten Gleisverlaufes in lateraler Richtung durchführbar.

Bei einer weiteren Verbesserung werden mittels der Sensoreinrichtung während einer Fahrt des Schienenfahrzeugs entlang des Gleises annähernd quer zur Gleisachse verlaufende Oberflächenprofile erfasst, wobei daraus als vorläufige Ist-Daten eine Punktwolke des Gleises und der benachbarten Einrichtungen abgespeichert werden. Für die Verarbeitung entsprechender Daten sind leistungsfähige Algorithmen bekannt, die eine schnelle Datentransformation ermöglichen. Zudem können Filtermethoden eingesetzt werden, um die Datenmenge zu reduzieren. Beispielsweise werden nur die Oberflächenpunkte der Schienen und des Fahrdrahtes weiterverarbeitet. Die Abspeicherung der Punktwolke geschieht günstigerweise in der Auswerteeinrichtung, um eine effiziente Datenverarbeitung sicherzustellen.

Dabei ist es günstig, wenn aus der Punktwolke mittels eines in der Auswerteeinrichtung eingerichteten Algorithmus die Oberflächenpunkte des Fahrdrahtes und der Schienen gefiltert werden. Das geschieht beispielweise mittels automatisierter Mustererkennung oder durch semantische Segmentierung der Punktwolke. Für die Transformation der vorläufigen Ist-Daten in korrigierte Ist-Daten verringert sich dadurch der Rechenaufwand.

In einer Weiterbildung des Verfahrens wird der Auswerteeinrichtung für eine jeweilige Befestigungsstelle des Fahrdrahtes am entsprechenden Mastausleger eine absolute Lage vorgegeben. Die mittels der Sensoreinrichtung erfassten Koordinaten der entsprechenden Befestigungsstelle sind somit lagerichtig in ein ortsfestes Koordinatensystem transformierbar. Dies geschieht günstigerweise im Zuge der Datentransformation. Als Resultat geben alle korrigierten Ist-Daten die richtige absolute Lage der erfassten Verläufe wider.

Alternativ dazu oder zur Steigerung der Genauigkeit ist es sinnvoll, wenn mittels der Sensoreinrichtung zumindest ein neben dem Gleis angeordneter Festpunktmarker erfasst wird. Auf diese Weise wird eine weitere Referenz für die Bestimmung der absoluten Lage der erfassten Verläufe genutzt. Dabei geben bereits erfasste Befestigungsstellen der Oberleitungsanlage die ungefähre Lage eines am entsprechenden Mast angebrachten Festpunktmarker an.

Eine Weiterbildung des Verfahrens sieht vor, dass durch eine am Schienenfahrzeug angeordnete Inertialmesseinheit (IMU) oder ein Klinometer eine Überhöhung des Gleises erfasst wird. Diese Messeinrichtung ist vorteilhafterweise an einem Schienenfahrwerk angeordnet. Die damit erfassten Überhöhungswerte stehen zusätzlich zu den korrigierten Ist-Daten für die Planung und Durchführung von Instandhaltungsmaßnahmen zur Verfügung.

Um die Genauigkeit bei der Ermittlung der Ist-Lage des Gleises zu erhöhen ist es sinnvoll, wenn der Verlauf des Gleises als ein Verlauf einer Schienenkante erfasst wird. Zu diesem Zweck ist beispielsweise in der Auswerteeinrichtung eine Mustererkennungssoftware eingerichtet, um die erfassten Ist-Daten mit vorgegebenen Schienenprofilen abzugleichen und damit einen Schienenkantenverlauf zu bestimmen.

Eine vorteilhafte Ausprägung des Systems sieht vor, dass eine Inertialmesseinheit (IMU) oder ein Klinometer zur Erfassung einer Gleisüberhöhung an einem Schienenfahrwerk angeordnet ist. Die Bewegung der IMU wird präzise im dreidimensionalen Raum erfasst und dient zur laufenden Lageermittlung gegenüber einem ortsfesten Bezugssystem. Damit liefert die IMU ebenso wie ein Klinometer exakte Messwerte einer Gleisüberhöhung.

Eine Weiterbildung des Systems sieht vor, dass die optische Sensoreinrichtung einen Laserscanner mit insbesondere horizontal ausgerichteter Rotationsachse umfasst. Damit sind auf effiziente Weise während einer Fahrt des Schienenfahrzeugs hochauflösende Lagedaten des Gleisverlaufs und benachbarter Infrastruktureinrichtungen erfassbar.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Seitenansicht eines Schienenfahrzeugs mit Sensoreinrichtung
- Fig. 2: zu erfassender Gleisabschnitt in einer Aufsicht
- Fig. 3: erfasste vorläufige Ist-Daten als Punktwolke
- Fig. 4: korrigierte Ist-Daten als Punktwolke

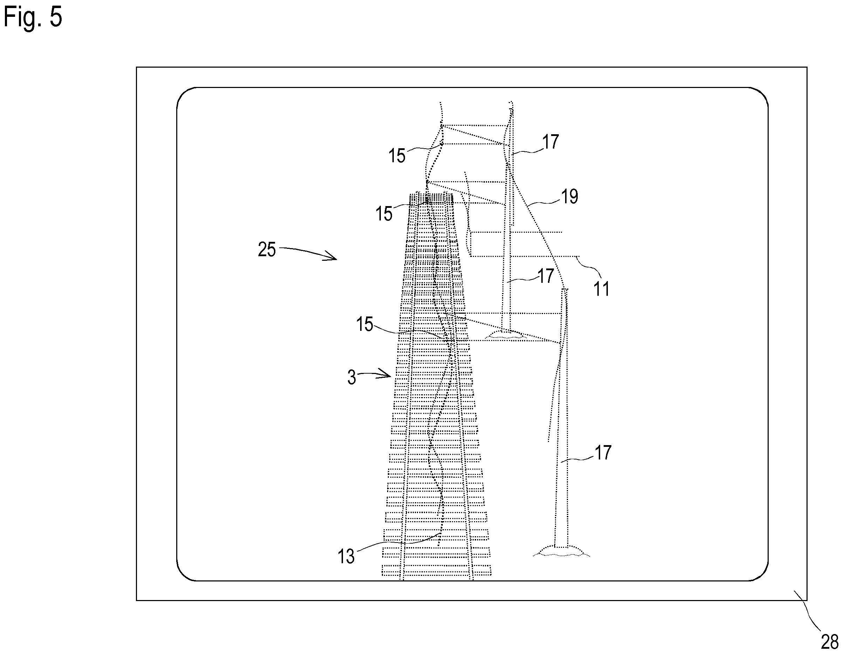

- Fig. 5: perspektivische Darstellung der Punktwolke

### Beschreibung der Ausführungsformen

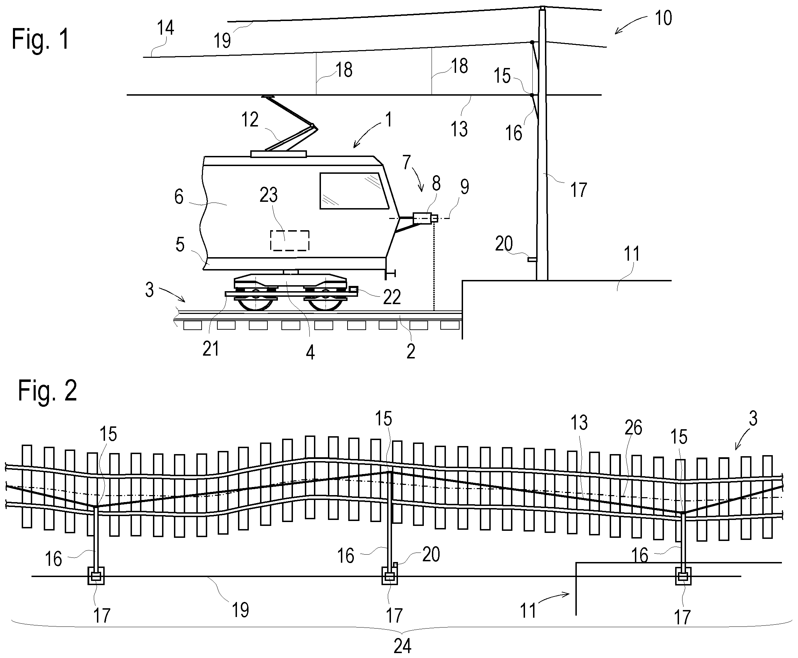

Fig. 1 zeigt einen vorderen Abschnitt eines vereinfacht dargestellten Schienenfahrzeugs 1 zur Ermittlung einer Ist-Lage von Schienen 2 eines Gleises 3. Dabei handelt es sich zum Beispiel um einen Messwagen, ein Instandhaltungsfahrzeug oder ein sonstiges Schienenfahrzeug mit messtechnischen Zusatzeinrichtungen. Das Schienenfahrzeug 1 ist mittels Schienenfahrwerken 4 auf dem Gleis 3 verfahrbar und umfasst einen Fahrzeugrahmen 5 samt Fahrzeugaufbau 6. An einer Front des Fahrzeugaufbaus 6 ist eine Sensoreinrichtung 7 angeordnet, die beispielsweise einen Laserscanner 8 umfasst. Dabei rotiert ein Laserstrahl um eine in Fahrzeuglängsrichtung ausgerichtete Rotationsachse 9 und misst in getakteten Zeitabständen Entfernungen zu Oberflächenpunkten des Gleises 3 samt benachbarter Einrichtungen 10, 11.

Auf dem Fahrzeugaufbau 6 ist ein Stromabnehmer 12 positioniert, um das Schienenfahrzeug 1 über eine Oberleitungsanlage 10 mit Energie zu versorgen. Die Oberleitungsanlage 10 umfasst eine Fahrdraht 13 und ein Tragseil 14. In regelmäßigen Abständen sind Befestigungsstellen 15 angeordnet, an welchen der Fahrdraht 13 jeweils an einem Mastausleger 16 eines Mastes 17 befestigt ist. Zwischen den Mastauslegern 16 ist der Fahrdraht 13 mittels Hänger 18 am Tragseil 14 aufgehängt. Zudem verläuft von Mastspitze zu Mastspitze eine sogenannte Spitzenleitung 19.

Zur Dokumentation der absoluten Lage der Gleis- bzw. Oberleitungsanlage 10 kommen gewöhnlich Festpunktmarker 20 zum Einsatz, die beispielsweise an Masten 17 befestigt sind. In einem Lageplan sind die genauen Positionen dieser Festpunktmarker 17 vermerkt. Für die vorliegende Erfindung ist es zudem sinnvoll, wenn für die Befestigungsstellen 15 absolute Lagekoordinaten vermessen und dokumentiert sind.

Zur Erfassung einer Gleisüberhöhung umfasst ein Schienenfahrwerk 4 einen Messrahmen 21, an dem eine Intertialmesseinheit (IMU) 22 angeordnet ist. Der Messrahmen 21 ist dabei direkt mit den Radachsen gekoppelt, sodass er ohne Relativbewegungen dem Gleisverlauf folgt. Alternativ dazu kann ein Klinometer zur Erfassung der Gleisüberhöhung dienen. Außerdem ist im Schienenfahrzeug 1 eine Auswerteeinrichtung 23 für eine Datenverarbeitung der Messergebnisse angeordnet.

Fig. 2 zeigt einen Gleisabschnitt 24 in einer Aufsicht mit stark übertriebenen Bogenkrümmungen bzw. Verwerfungen, um die Lehre der vorliegenden Erfindung zu veranschaulichen. Beim Befahren dieses Gleisabschnittes 24 erfasst der Laserscanner 8 Oberflächenprofile des Gleises 3, der Oberleitungsanlage 10 und weiterer Einrichtungen wie zum Beispiel eines Bahnsteigs 11. Konkret werden für jeden erfassten Punkt Koordinaten in einem Bezugssystem der Sensoreinrichtung 7 erfasst, sodass für den gesamten Gleisabschnitt 24 eine Punktwolke 25 gebildet wird.

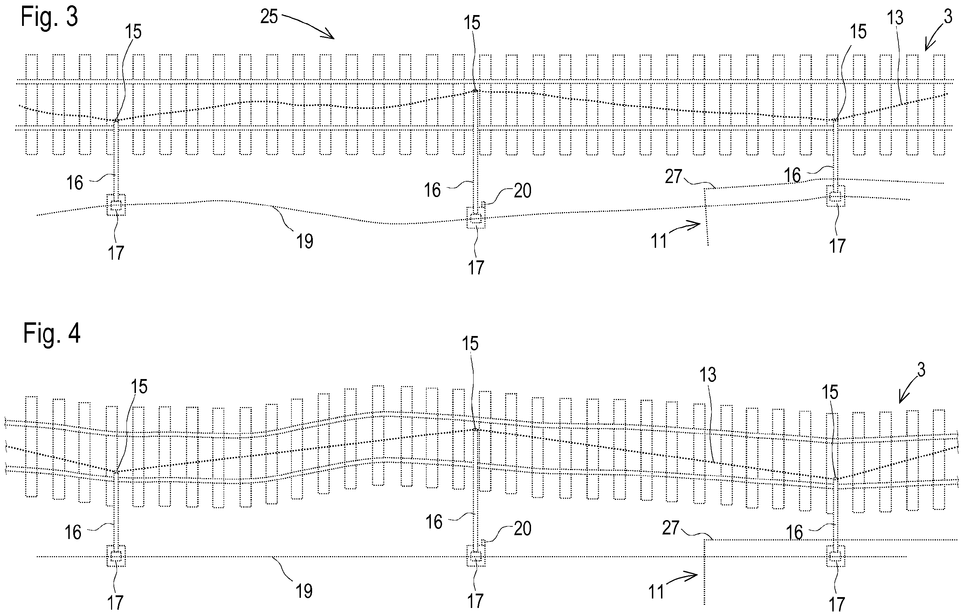

Da sich das Bezugssystem der Sensoreinrichtung 7 während der Datenerfassung mit dem Fahrzeugrahmen mitbewegt, ist die Punktwolke 25 zunächst verzerrt, wie in Fig. 3 dargestellt. Dabei erscheinen die Schienen 2 annähernd gerade, weil die Rotationsachse 9 des Laserscanners 8 im Wesentlichen tangential zur Gleisachse 26 geführt wird. Eine tatsächlich vorhandene Bogenkrümmung des Gleises 3 führ dazu, dass alle anderen erfassten Einrichtungen 10, 11 gekrümmt erfasst werden, wobei diese vorläufig erfassten Scheinkrümmungen mit der Bogenkrümmung des Gleises 3 korrelieren. Insbesondere korreliert die aufgezeichnete Scheinkrümmung des Fahrdrahtes 13 mit der eigentlichen Gleiskrümmung. Mit der Aufzeichnung des Verlaufs des Fahrdrahtes 13 im dreidimensionalen Raum wird zudem eine Längsneigung des Gleises 3 erfasst.

Die vorläufigen mittels Sensoreinrichtung 7 erfassten Ist-Daten werden der Auswerteeinrichtung 23 zugeführt, um eine Transformation in korrigierte Ist-Daten durchzuführen. Dazu werden zunächst die Befestigungsstellen 15 des Fahrdrahtes 13 ermittelt. Aufgrund der Zickzackanordnung sind das die Stellen mit einer maximalen Krümmung. Für das weitere Verfahren erfolgt die Vorgabe, dass der Fahrdraht 13 zwischen den Befestigungsstellen 15 in Form einer Geraden verläuft. Geringfügige Abweichungen durch Windlast oder eine Kontaktkraft des Stromabnehmers 12 sind gewöhnlich vernachlässigbar. Für eine Steigerung der Genauigkeit werden diese Einflussfaktoren gemessen und es erfolgt eine rechnerische Kompensation.

Vorläufig bilden die Punkte der Punktwolke 25, die den Verlauf des Fahrdrahtes 13 angeben, einen Polygonzug. Bei der Datentransformation wird dieser Polygonzug in einem gemeinsamen Bezugssystem entlang der vorgegebenen Gerade ausgerichtet. Dabei wird jedes Segment (Strecke) des Polygonzugs rechnerisch verschoben und verdreht. Zudem werden alle Punkte der Punktwolke 25, die auf einer Normalebene zum jeweiligen Segment liegen, entsprechend mitverschoben und mitverdreht. Auf diese Weise werden alle Punkte der Punktwolke 25 transformiert, sodass als Ergebnis korrigierte Ist-Daten vorliegen. Die in Fig. 4 dargestellte transformierte Punktwolke gibt somit die eigentliche Krümmung des Gleises 3 wider.

Andere erfasste Verläufe sind in entsprechender Weise anstelle des Fahrdrahtverlaufs zur Transformation der Ist-Daten heranziehbar. Zum Beispiel kann für eine erfasste Kante 27 des Bahnsteigs 11 eine Gerade als geometrische Form vorgegeben werden. Oder es wird für die Spitzenleitung 19 von Mast 17 zu Mast 17 eine nach unten durchhängende Seilkurve vorgegeben. Es können auch für mehrere erfasste Einrichtungen 10, 11 entsprechende geometrische Formen vorgegeben werden. Für die Ausrichtung der Polygonsegmente während der Datentransformation wird dann ein Optimum ermittelt, das allen Vorgaben am besten entspricht.

Eine weitere Verbesserung des Verfahrens sieht vor, dass in Lageplänen vermerkte absolute Koordinaten der Befestigungsstellen 15 des Fahrdrahtes 13 bei der Datentransformation genutzt werden. Diese Referenzpunkte bestimmen im gemeinsamen Bezugssystem die Lage der jeweiligen Gerade für die Ausrichtung des Scheinverlaufs des Fahrdrahtes 13. Die resultierenden korrigierten Ist-Daten geben dann nicht nur die richtigen Krümmungen wider, sondern auch die richtige Position im Gelände.

Zur Bestimmung der absoluten Lage können auch die Festpunktmarker 20 herangezogen werden, wenn diese in der Punktwolke 25 miterfasst sind. Die Erkennung der entsprechenden Oberflächenpunkte in der Punktwolke 25 erfolgt dabei wie bei den Elementen der Oberleitungsanlage 10 oder der Bahnsteige 11 durch semantische Segmentierung bzw. Mustererkennung.

Für eine Überwachung der Datentransformation kann die Punktwolke 25 in einem Monitor 27 dargestellt werden. Fig. 4 zeigt die Punktwolke 25 des erfassten Gleisabschnitts 24 in einer Zentralperspektive mit den vorläufigen Ist-Daten.

## Patentansprüche

1. Verfahren zur Ermittlung einer Ist-Lage von Schienen (2) eines Gleises (3) mittels einer auf einem Schienenfahrzeug (1) positionierten optischen Sensoreinrichtung (7) zur Lageerfassung des Gleises (3) und benachbarter Einrichtungen (10, 11), **dadurch gekennzeichnet, dass** mittels der Sensoreinrichtung (7) für einen Gleisabschnitt (24) ein Verlauf des Gleises (3) und ein Verlauf jeder der benachbarten Einrichtungen (10, 11), insbesondere einer Oberleitungsanlage (10) als vorläufige Ist-Daten erfasst werden und dass in einer Auswerteeinrichtung (23) die vorläufigen Ist-Daten in korrigierte Ist-Daten transformiert werden, indem ein erfasster Verlauf zumindest einer der benachbarten Einrichtungen (10, 11) in einen Verlauf mit einer vorgegebenen geometrischen Form transformiert wird.

2. Verfahren nach Anspruch 1, **dadurch gekennzeichnet, dass** für den erfassten Verlauf eines Fahrdrahtes (13) der Oberleitungsanlage (10) als eine der benachbarten Einrichtungen zwischen zwei Befestigungsstellen (15) an Mastauslegern (16) eine Gerade als geometrische Form vorgegeben wird.

3. Verfahren nach Anspruch 2, **dadurch gekennzeichnet, dass** die jeweilige Befestigungsstelle (15) an einem Mastausleger (16) erfasst wird, indem für den erfassten Verlauf des Fahrdrahtes (13) eine Stelle mit einer maximalen Krümmung ermittelt wird.

4. Verfahren nach Anspruch 2 oder 3, **dadurch gekennzeichnet, dass** der Verlauf des Fahrdrahtes (13) als ein Verlauf einer Fahrdrahtkante erfasst wird.

5. Verfahren nach einem der Ansprüche 1 bis 4, **dadurch gekennzeichnet, dass** für den erfassten Verlauf einer Bahnsteigkante (27), als eine der benachbarten Einrichtungen, eine Gerade als geometrische Form vorgegeben wird.

6. Verfahren nach einem der Ansprüche 1 bis 5, **dadurch gekennzeichnet, dass** für den erfassten Verlauf einer Spitzenleitung (19), als eine der benachbarten Einrichtungen, zwischen zwei Mastspitzen eine Seilkurve als geometrische Form vorgegeben wird.

7. Verfahren nach einem der Ansprüche 1 bis 6, **dadurch gekennzeichnet, dass** mittels der Sensoreinrichtung (7) während einer Fahrt des Schienenfahrzeugs (1) entlang des Gleises (3) annähernd quer zur Gleisachse (26) verlaufende Oberflächenprofile erfasst werden und dass daraus als vorläufige Ist-Daten eine Punktwolke (25) des Gleises (3) und der benachbarten Einrichtungen (10, 11) abgespeichert werden.

8. Verfahren nach Anspruch 7, **dadurch gekennzeichnet, dass** aus der Punktwolke (25) mittels eines in der Auswerteeinrichtung (23) eingerichteten Algorithmus die Oberflächenpunkte des Fahrdrahtes (13) und der Schienen (2) gefiltert werden.

9. Verfahren nach einem der Ansprüche 1 bis 8, **dadurch gekennzeichnet, dass** der Auswerteeinrichtung (23) für eine jeweilige Befestigungsstelle (15) des Fahrdrahtes (13) am entsprechenden Mastausleger (16) eine absolute Lage vorgegeben wird.

10. Verfahren nach einem der Ansprüche 1 bis 9, **dadurch gekennzeichnet, dass** mittels der Sensoreinrichtung (7) zumindest ein neben dem Gleis (3) angeordneter Festpunktmarker (20) erfasst wird.

11. Verfahren nach einem der Ansprüche 1 bis 10, **dadurch gekennzeichnet, dass** durch eine am Schienenfahrzeug (1) angeordnete Inertialmesseinheit (22) oder ein Klinometer eine Überhöhung des Gleises (3) erfasst wird.

12. Verfahren nach einem der Ansprüche 1 bis 11, **dadurch gekennzeichnet, dass** der Verlauf des Gleises (3) als ein Verlauf einer Schienenkante erfasst wird.

13. System zur Durchführung eines Verfahrens nach einem der Ansprüche 1 bis 12, **dadurch gekennzeichnet, dass** die Sensoreinrichtung (7) zur Erfassung eines Verlaufs des Gleises (3) und eines Verlaufs jeder der benachbarten Einrichtungen (10, 11) eingerichtet ist, dass der Auswerteeinrichtung (23) aus einem Erfassungsvorgang resultierende vorläufigen Ist-Daten zugeführt sind und dass die Auswerteeinrichtung (23) zum Berechnen korrigierter Ist-Daten durch eine Transformation eines erfassten Verlaufs zumindest einer der benachbarten Einrichtungen (10, 11) in einen Verlauf mit einer vorgegebenen geometrischen Form eingerichtet ist.

14. System nach Anspruch 13, **dadurch gekennzeichnet, dass** an dem Schienenfahrzeug (1) eine Inertialmesseinheit (22) oder ein Klinometer zur Erfassung einer Gleisüberhöhung an einem Schienenfahrwerk (4) angeordnet ist.

15. System nach Anspruch 13 oder 14, **dadurch gekennzeichnet, dass** die optische Sensoreinrichtung (7) einen Laserscanner umfasst ist.

## Claims

1. A method for determining an actual position of rails (2) of a track (3) by means of an optical sensor device (7), positioned on a rail vehicle (1), for recording the position of the track (3) and adjacent installations (10, 11), **characterized in that**, by means of the sensor device (7), a course of the track (3) and a course of each of the adjacent installations (10, 11), in particular a catenary installation (10), are recorded for a track section (24) as preliminary actual data, and that the preliminary actual data are transformed into corrected actual data in an evaluation device (23) **in that** a recorded course of at least one of the adjacent installations (10, 11) is transformed into a course with a specified geometric shape.

2. A method according to claim 1, **characterized in that** a straight line is specified as geometric shape for the recorded course of a contact wire (13) of the catenary installation (10) as one of the adjacent installations between two fastening points (15) on mast cantilevers (16).

3. A method according to claim 2, **characterized in that** the respective fastening point (15) on a mast cantilever (16) is recorded **in that** a point with a maximal curvature is determined for the recorded course of the contact wire (13).

4. A method according to claim 2 or 3, **characterized in that** the course of the contact wire (13) is recorded as a course of a contact wire edge.

5. A method according to one of claims 1 to 4, **characterized in that** a straight line is specified as geometric shape for the recorded course of a platform edge (27) as one of the adjacent installations.

6. A method according to one of claims 1 to 5, **characterized in that** a funicular curve is specified as geometric shape for the recorded course of a tip line (19) as one of the adjacent installations between two mast tips.

7. A method according to one of claims 1 to 6, **characterized in that** surface profiles extending approximately transversely to the track axis (26) are recorded by means of the sensor device (7) during travel of the rail vehicle (1) along the track (3), and that from this a point cloud (25) of the track (3) and of the adjacent installations (10, 11) is stored as preliminary actual data.

8. A method according to claim 7, **characterized in that** the surface points of the contact wire (23) and the rails (2) are filtered from the point cloud (25) by means of an algorithm set up in the evaluation device (23).

9. A method according to one of claims 1 to 8, **characterized in that** an absolute position for a respective fastening point (15) of the contact wire (13) to the corresponding mast cantilever (16) is prescribed to the evaluation device (23).

10. A method according to one of claims 1 to 9, **characterized in that** at least one fixed point marker (20) arranged beside the track (3) is recorded by means of the sensor device (7).

11. A method according to one of claims 1 to 10, **characterized in that** a super-elevation of the track (3) is recorded by an inertial measuring unit (22) arranged on the rail vehicle (1), or by a clinometer.

12. A method according to one of claims 1 to 11, **characterized in that** the course of the track (3) is recorded as a course of a rail edge.

13. A system for implementing a method according to one of claims 1 to 12, **characterized in that** the sensor device (7) is designed for recording a course of the track (3) and a course of each of the adjacent installations (10, 11), that preliminary actual data resulting from a recording process are fed to the evaluation device (23), and that the evaluation device (23) is designed for calculating corrected actual data by way of a transformation of a recorded course of at least one of the adjacent installations (10, 11) into a course with a specified geometric shape.

14. A system according to claim 13, **characterized in that** an inertial measuring unit (22) or a clinometer for recording a super-elevation is arranged on an on-track undercarriage (4) on the rail vehicle (1).

15. A system according to claim 13 or 14, **characterized in that** the optical sensor device (7) comprises a laser scanner.

## Revendications

1. Procédé de détermination d'une position réelle de rails (2) d'une voie ferrée (3) au moyen d'un dispositif de capteur optique (7) positionné sur un véhicule ferroviaire (1) pour la détection de position de la voie ferrée (3) et de dispositifs voisins (10, 11), **caractérisé en ce qu'**un tracé de la voie ferrée (3) et un tracé de chacun des dispositifs voisins (10, 11), notamment d'une installation de caténaires (10), sont détectés en tant que données réelles provisoires au moyen du dispositif de capteur (7) pour une section de voie (24) et que les données réelles provisoires sont transformées en données réelles corrigées dans un dispositif d'évaluation (23) **en ce qu'**un tracé détecté d'au moins un des dispositifs voisins (10, 11) est transformé en un tracé avec une forme géométrique prédéfinie.

2. Procédé selon la revendication 1, **caractérisé en ce qu'**une droite est prédéfinie en tant que forme géométrique entre deux points de fixation (15) à des potences de poteau (16) pour le tracé détecté d'un fil de contact (13) de l'installation de caténaires (10) en tant qu'un des dispositifs voisins.

3. Procédé selon la revendication 2, **caractérisé en ce que** le point de fixation respectif (15) à une potence de poteau (16) est détecté **en ce qu'**un point avec une courbure maximale est déterminé pour le tracé détecté du fil de contact (13).

4. Procédé selon la revendication 2 ou 3, **caractérisé en ce que** le tracé du fil de contact (13) est détecté en tant que tracé d'une arête de fil de contact.

5. Procédé selon une des revendications 1 à 4, **caractérisé en ce qu'**une droite est prédéfinie en tant que forme géométrique pour le tracé détecté d'une bordure de quai (27), en tant qu'un des dispositifs voisins.

6. Procédé selon une des revendications 1 à 5, **caractérisé en ce qu'**une chaînette est prédéfinie en tant que forme géométrique entre deux pointes de poteau pour le tracé détecté d'une ligne de pointe (19), en tant qu'un des dispositifs voisins.

7. Procédé selon une des revendications 1 à 6, **caractérisé en ce que** des profils superficiels s'étendant approximativement transversalement à l'axe de voie (26) sont détectés au moyen du dispositif de capteur (7) pendant un trajet du véhicule ferroviaire (1) le long de la voie ferrée (3) et qu'un nuage de points (25) de la voie ferrée (3) et des dispositifs voisins (10, 11) est mémorisé à partir de ceux-ci en tant que données réelles provisoires.

8. Procédé selon la revendication 7, **caractérisé en ce que** les points superficiels du fil de contact (13) et des rails (2) sont filtrés du nuage de points (25) au moyen d'un algorithme configuré dans le dispositif d'évaluation (23).

9. Procédé selon une des revendications 1 à 8, **caractérisé en ce qu'**une position absolue est prédéfinie vers le dispositif d'évaluation (23) pour un point de fixation respectif (15) du fil de contact (13) à la potence de poteau correspondante (16).

10. Procédé selon une des revendications 1 à 9, **caractérisé en ce qu'**au moins un marqueur de point fixe (20) disposé près de la voie ferrée (3) est détecté au moyen du dispositif de capteur (7).

11. Procédé selon une des revendications 1 à 10, **caractérisé en ce qu'**un surhaussement de la voie ferrée (3) est détecté par un module de mesure inertielle (22) disposé sur le véhicule ferroviaire (1) ou un inclinomètre.

12. Procédé selon une des revendications 1 à 11, **caractérisé en ce que** le tracé de la voie ferrée (3) est détecté en tant que tracé d'une arête de rail.

13. Système pour la réalisation d'un procédé selon une des revendications 1 à 12, **caractérisé en ce que** le dispositif de capteur (7) est configuré pour la détection d'un tracé de la voie ferrée (3) et d'un tracé de chacun des dispositifs voisins (10, 11), que des données réelles provisoires résultant d'un processus de détection sont acheminées au dispositif d'évaluation (23) et que le dispositif d'évaluation (23) est configuré pour le calcul de données réelles corrigées par une transformation d'un tracé détecté d'au moins un des dispositifs voisins (10, 11) en un tracé avec une forme géométrique prédéfinie.

14. Système selon la revendication 13, **caractérisé en ce qu'**un module de mesure inertielle (22) ou un inclinomètre est disposé sur le véhicule ferroviaire (1) pour la détection d'un surhaussement de voie sur un mécanisme de roulement ferroviaire (4).

15. Système selon la revendication 13 ou 14, **caractérisé en ce que** le dispositif de capteur optique (7) comprend un scanner laser.
